(19) Europäisches Patentamt
European Patent Office
Office européen des brevets

(11) Publication number: **0 213 648 B1**

# EUROPEAN PATENT SPECIFICATION

(45) Date of publication of patent specification: **04.09.91**

(51) Int. Cl.⁵: **F16L 55/10, F16K 31/10**

(21) Application number: **86201125.1**

(22) Date of filing: **26.06.86**

(54) **Shutoff device for a pipe.**

(30) Priority: **22.07.85 NL 8502102**

(43) Date of publication of application:
**11.03.87 Bulletin 87/11**

(45) Publication of the grant of the patent:
**04.09.91 Bulletin 91/36**

(84) Designated Contracting States:
**DE GB NL**

(56) References cited:
**FR-A- 2 550 602**
**US-A- 3 313 317**
**US-A- 3 692 057**

(73) Proprietor: **B.V. KONINKLIJKE MAATSCHAPPIJ "DE SCHELDE"**
**Glacisstraat 165 P.O. Box 16**
**NL-4381 SE Vlissingen(NL)**

(72) Inventor: **Herrebout, Cornelis Abraham**
**Singel 350**
**NL-4381 VP Vlissingen(NL)**
Inventor: **van Sluijs, Johan Marinus**
**Singel 275-277**
**NL-4381 VK Vlissingen(NL)**

(74) Representative: **van der Beek, George Frans, Ir. et al**
**Nederlandsch Octrooibureau Scheveningseweg 82 P.O. Box 29720**
**NL-2502 LS 's-Gravenhage(NL)**

## Description

The invention relates to a shutoff device of a pipe, comprising a housing, having therein

a tiltable valve which can shut off the entrance to a debouchment of the pipe;

spring means which work in conjunction with the valve and which in the released state tilt the valve away from the debouchment;

electromagnetic shifting elements which work in conjunction with the valve and which on excitation can tilt the valve against the spring force of the spring means towards the debouchment, thereby shutting the latter off;

a plunger which is connected to the valve and is movable by the elektromagnetic elements, and which is at least partially situated inside the coil of the electromagnetic elements. A shutoff device of this type is known from US Patent 3,692,057.

In many plants a large number of vessels is often connected to each other by means of pipes and collecting pipes. In general, such pipes are connected with pipe flanges or pipe plates, for example welded to them, said flanges or plates being fixed on the vessels. Such plants are used, for example, in process technology.

If a fault occurs in one of the vessels and undesirable products are discharged, it is important that such products should be confined to this one vessel, so that they cannot go into the connected pipes and other vessels connected via these pipes, thereby contaminating them. This applies in particular to plants in which gaseous contamination products can spread rapidly through the whole pipe system and can reach other vessels.

There is therefore a need for a shutoff device by means of which such vessels in which the undesirable reaction products are produced - and if necessary also all other vessels connected by means of the pipe system - can be quickly shut off, and where it must be seen clearly which vessel is . or which vessels are shut off. With the aid of, for example, suitable detectors, it can then be established if necessary which vessel was shut off. In that case, it is often only necessary to take out of service this one vessel in which the fault has occurd.

The invention now produces a shutoff device which meets the above-mentioned requirements and which is characterized by the housing being positioned opposite the debouchment of a pipe in a matching recess of a pipe flange or in an intermediate plate, which housing is in the form of a hollow cylinder whose centre line mainly coincides with the centre line of the pipe to be shut off or opened, and which housing is provided with a narrowed opening which forms a seat for the valve, inside which housing is supported a tubular plunger of magnetizable material which can slide in the direction of the said centre line from and to the said seat, and is thereby pressed by a spring away from said seat and can be shifted by an electrically excited coil accomodated in the housing against the spring force of the said spring towards the seat, and mounted inside the said plunger is the valve which on displacement of the plunger towards the seat can shut off this seat.

The present invention deliberately selects for the shutoff device a place where the pipe debouches or the pipes debouch by means of the pipe flange or pipe plate in a vessel or housing, since this provides the greatest possible protection of the connected pipes and other devices. Moreover, in view of the available space, such a shutoff device can be fitted in a simple manner here. The combination with the flange or intermediate plate also has the advantage that, if necessary, after shutting off the pipe(s), a vessel or housing can easily be taken out of service or replaced, without pipes which may be welded having to be detached. The complete shutoff unit, for example, the intermediate plate with the parts accommodated in it, is also easy to replace.

The shutoff device according to the invention is particularly simple in design and is easy to fit. By means of the electrical excitation elements which press the valve against the seat, it is easy to see which valve is pressed shut, because the electrical excitation for it is still operating, somethingh which can be seen clearly from the outside. The shutoff vessel can then be replaced in a simple manner.

Preferably the valve is a bored ball valve, while means can be present which cause the valve on shifting to tilt through 90 degrees. In the closed state the ball-shaped side wall then shuts off the seat and in the open state the bore of the valve is in line with the debouchment of the pipe, so that the medium can flow unimpeded through this bore.

The valve is tiltably by placing it on a shaft in the plunger mounted transversely to the direction of movement of the plunger. The valve is also provided with an eccentric bore which is in engagement with a tilting arm which causes the valve to tilt when the valve is displaced by the plunger. The tilting arm is fitted under spring force in such a way that, after the valve tilts through 90 degrees, when the plunger is moved further the tilting arm can be displaced further under spring force with the valve.

Above US Patent 3,692,057 discloses a distribution valve having three valve ports and two tiltable valves, which can be controlled by electromagnetic means to shut or open successively one of the valve ports. The valves and electromagnetic means are received in a housing connected with three pipes. However, this housing is not received in a recess in a pipe flange or plate opposite the debouchment of one of the pipes as in the present invention.

US Patent 3,313,317 discloses an electromagnetic valve consisting of a cylindrical plunger axially movable in a bore and having grooves formed in the outside surface. A pipe debouches in this bore and the entrance of this pipe can be shut or opened by axially moving this plunger perpendicularly to the pipe. However, in this US Patent the valve is not housed in a pipe flange or plate. Neither the valve housing is in the form of a hollow cylinder whose center line coincides with the center line of the pipe as in the present invention.

The invention will now be explained in greater detail with reference to the examples of embodiments shown in the drawings.

Figure 1 shows a longitudinal section of an embodiment of the invention.

Figure 2 shows the embodiment of Figure 1 with the valve in the open position.

The shutoff device is housed in a cavity disposed opposite the debouchment of the pipe 21 in the pipe flange 20.

The shutoff device consists of a two-part hollow cylindrical housing 3 and 4 which slides so that it fits into a recess in the flange 20, and which in the part 3 opposite the debouchment of the pipe 21 is provided with a narrowed passage 27 with a seat which can be shut off by the valve 5 and the O-ring 23.

Into the cylindrical housing 4 fits a cylindrical plunger 2, which can be moved to and fro along the centre line of the housing 4 and the pipe 21 connecting thereto.

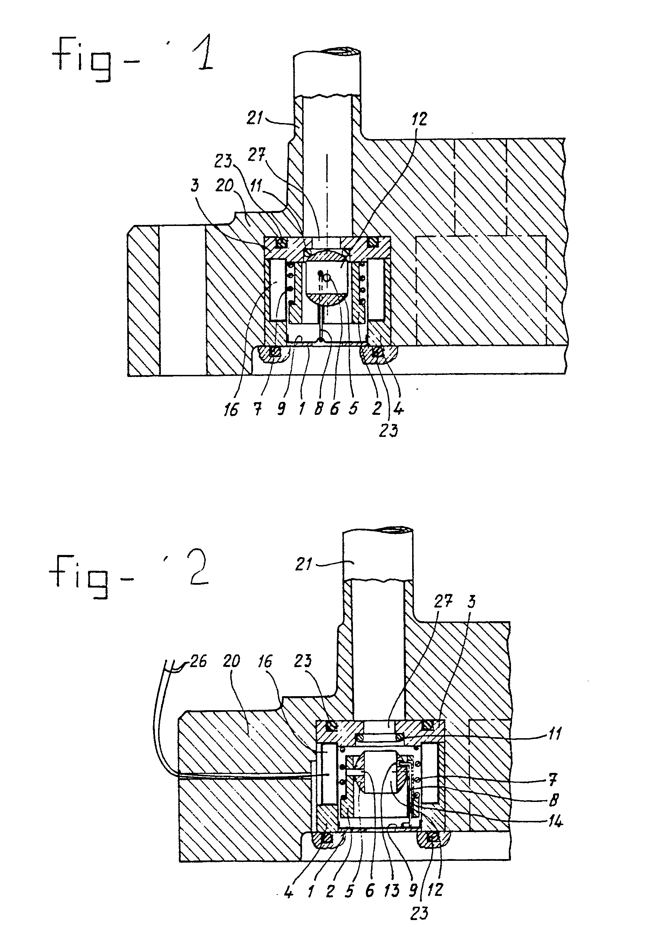

The valve 5 consists here of a bored ball valve with large bore 12, which is at right angles to the debouchment in the position shown in Fig. 3.

The ball valve 5 is supported rotating about a shaft 6 in the plunger 2, so that this ball valve can tilt from the position shown in Fig. 3 to the position shown in Fig. 4, in which free passage is given to the medium through the bore 12.

The ball is also provided with an eccentric bore 13 (see in particular Fig. 4) which runs parallel to the shaft 6. Connected hingedly to this eccentric bore 13 is part of a tilting arm 8. The tilting arm 8 is also hingedly attached to an annular spring plate 9, which again is confined between the cover plate 1 and the housing 4.

The tilting arm 8 can move freely in a slotted recess 14 in plunger 2, which recess through its shape and dimensions ensures the limitation of the rotation stroke of the ball, namely 90 degrees.

In the rest position the plunger 2 is pressed down, by a spring 7 extending round the plunger 2, against the spring plate 9, which in this state is free of tension. The tilting arm 8 ensures that the valve 5 is then open (see Fig. 4).

If the magnetic coil is excited electrically by feeding current to the coil 16 through the conductor 26, the plunger 2 will be moved vertically upwards to the position shown in Fig. 3. Here the valve 5 will be tilted by means of the tilting arm 8 through 90 degrees, which is completed before the full displacement stroke of the plunger 2 has ended.

Since the ball cannot tilt further, spring 9 will now enable tilting arm 8 to shift vertically with the remaining part of the stroke of the plunger 2. In this last part of the stroke the plunger 2 will go against the housing 4 and the valve 5 against the seat 11.

Since this tilting requires very little energy and no moment arm is present between plunger 2 and valve 5, almost all energy can be used to obtain a relatively high valve-valve seat pressure, which results in very small coil dimensions.

The housing parts 3 and 4 are connected to each other by means of a welded joint. This ensures that the medium cannot come into contact with the magnetic coil, which can be undesirable in view of the materials used in the process.

The electromagnetically operated ball valve according to this embodiment has as characterizing advantages a large passage, no friction of the ball surface along a shutoff face during the tilting and no mechanical bushings to the outside in order to produce this tilting. Since the ball surface during the tilting does not rub along the shutoff face, there is no risk of damage to this face, and the energy which is needed to produce this tilting is kept to a minimum.

## Claims

1. Shutoff device of a pipe, comprising a housing, having therein

   a tiltable valve which can shut off the entrance to a debouchment of the pipe;

   spring means which work in conjunction with the valve and which in the released state tilt the valve away from the debouchment;

   electromagnetic shifting elements which work in conjunction with the valve and which on excitation can tilt the valve against the spring force of the spring means towards the debouchment, thereby shutting the latter off;

   a plunger which is connected to the valve and is movable by the electromagnetic elements, and which is at least partially situated inside the coil of the electromagnetic elements;

   characterized by the housing (3, 4) being positioned opposite the debouchment of a pipe (21) in a matching recess of a pipe flange or in an intermediate plate (20), which housing (3, 4) is in the form of a hollow cylinder whose centre line mainly coincides with the centre line of the pipe to be shut off or opened, and which housing (3, 4) is provided with a narrowed opening which forms a seat for the valve (5), inside which housing is supported a tubular plunger (2) of magnetizable material which can slide in the direction of the said centre line from and to the said seat, and is thereby pressed by an electrically excited coil accomodated in the housing against the spring force of the said spring (7) towards the seat, and mounted inside the said plunger (2) is the valve (5) which on displacement of the plunger (2) towards the seat can shut off this seat.

2. Shutoff device according to claim 1, characterized in that the valve (5) is a bored ball valve, and means are present which cause the valve (5) on shifting to tilt through 90 degrees in such a way that in the closed state the ball-shaped side wall shuts off the seat and in the open state the bore of the valve (5) is in line with the debouchment of the pipe.

3. Shutoff device according to claim 2, characterized in that the valve (5) is tiltably mounted in the plunger (2) on a shaft (6) mounted transversely to the direction of movement of the plunger and the valve (5) is provided with an eccentric bore which is in contact with a tilting arm (8) which causes the valve to tilt when the valve (5) is displaced by the plunger (2).

4. Shutoff device according to claim 3, characterized in that the tilting arm (8) is fitted under spring force in such a way that after the ball valve (5) is caused to tilt through 90 degrees, the tilting arm (8) is displaced further under spring force with the ball valve (7).

5. A shutoff device for a pipe as claimed in one of the foregoing claims.

**Revendications**

1. Dispositif d'obturation de tube comportant un boîtier qui contient

un vanne basculante susceptible d'obturer l'entrée du débouché d'un tube,

des moyens de ressort qui coopèrent avec la vanne et, à l'état relâché, basculent la vanne en l'éloignant du débouché,

des éléments de déplacement électromagnétiques qui coopèrent avec la vanne et, lorsqu'ils sont excités, peuvent faire basculer la vanne vers le débouché contre la force de ressort des moyens de ressort, ce qui a pour effet d'obturer le débouché,

un plongeur qui est relié à la vanne, susceptible d'être déplacé par les éléments électromagnétiques, et se trouve au moins partiellement à l'intérieur de la bobine des éléments électromagnétiques,

caractérisé en ce que le boîtier (3,4) est placé vis-à-vis du débouché d'un tube (21) dans une cavité correspondante d'une bride de tube ou dans une plaque intermédiaire (20), ce boîtier (3,4) se présentant sous forme d'un cylindre creux dont la ligne axiale coïncide essentiellement avec la ligne axiale du tube à obturer ou ouvrir, et ce boîtier (3,4) étant pourvu d'une ouverture rétrécie qui forme un siège pour la vanne (5), tandis qu'à l'intérieur de ce boîtier est supporté un plongeur tubulaire (2) en matériau magnétisable qui peut glisser en direction de ladite ligne axiale vers et en éloignement dudit siège, ce plongeur se trouvant ainsi pressé vers le siège contre la force de ressort dudit ressort (7) par une bobine logée dans le boîtier et excitée électriquement, et à l'intérieur de ce plongeur (2) est montée la vanne (5) qui peut obturer le siège lors du déplacement du plongeur (2) vers ce siège.

2. Dispositif d'obturation selon la revendication 1, caractérisé en ce que la vanne (5) est une vanne sphérique percée d'un canal, et il est prévu des moyens qui ont pour effet que lors de son déplacement la vanne (5) bascule de 90 degrés de telle manière qu'à l'état fermé la paroi latérale de forme sphérique obture le siège et à l'état ouvert le canal de la vanne (5) se trouve aligné avec le débouché du tube.

3. Dispositif d'obturation selon la revendication 2, caractérisé en ce que la vanne (5) est montée à bascule dans le plongeur sur un axe (6) monté transversalement à la direction de mouvement du plongeur et la vanne (5) est pourvue d'un canal excentré qui est en contact avec un bras de basculement (8) qui a pour effet de faire basculer la vanne quand la vanne (5) est déplacée par le plongeur (2).

4. Dispositif d'obturation selon la revendication 3, caractérisé en ce que le bras de basculement (8) est soumis à une force de ressort de telle manière qu'après que la vanne sphérique (5) a été amenée à basculer de 90 degrés le bras de basculement (8) est déplacé plus loin avec la vanne (5) tout en demeurant soumis à la force de ressort.

5. Dispositif d'obturation pour tube tel que revendiqué dans l'une des revendications précédentes.

**Patentansprüche**

1. Sperrvorrichtung eines Rohres, umfassend ein Gehäuse, welches enthält:

ein kippbares Ventil, mit welchem der Eingang zu einem Auslass des Rohres sperrbar ist;

Federmittel, die mit dem Ventil zusammenwirken und im entlasteten Zustand das Ventil vom Auslass weg kippen;

elektromagnetische Verschiebungselemente, die mit dem Ventil zusammenwirken und mit welchen, wenn sie erregt sind, das Ventil gegen die Federkraft der Federmittel zum Auslass hin kippbar ist, wodurch dieser Auslass gesperrt wird;

ein mit dem Ventil verbundener und von den elektromagnetischen Elementen bewegbarer Taucher, der zumindest teilweise innerhalb der Spule der elektromagnetischen Elemente angeordnet ist,

dadurch gekennzeichnet, dass das Gehäuse (3,4) gegenüber dem Auslass eines Rohres (21) in einer entsprechenden Ausnehmung eines Rohrflansches oder in einer Zwischenplatte (20) angeordnet ist, wobei dieses Gehäuse (3,4) als Hohlzylinder geformt ist, dessen axiale Linie im wesentlichen mit der axialen Linie des zu sperrenden bzw. öffnenden Rohres übereinstimmt und mit einer verjüngten, den Sitz eines Ventils (5) bildenden Oeffnung versehen ist, während innerhalb dieses Gehäuses ein rohrförmiger Taucher (2) aus magnetisierbarem Material abgestützt ist und in Richtung der genannten axialen Linie zum genannten Sitz hin und davon weg gleiten kann, wobei der Taucher durch eine elektrisch angeregte, im Gehäuse eingesetzte Spule gegen die Federkraft der genannten Feder (7) zum Sitz hin gedrückt wird, und innerhalb dieses Tauchers (2) das Ventil (5) montiert ist, welches beim Verschieben des Tauchers (2) zum Sitz hin diesen Sitz sperren kann.

2. Sperrvorrichtung nach Anspruch 1, dadurch gekennzeichnet, dass das Ventil (5) ein mit einer Bohrung versehenes Kugelventil ist, und dass Mittel vorgesehen sind, welche bewirken, dass das Ventil (5) bei seiner Verschiebung auf solche weise um 90 Grad gekippt wird, dass im geschlossenen Zustand der Sitz von der kugelförmigen Seitenwandung gesperrt wird und im geöffneten Zustand die Bohrung des Ventils (5) mit dem Auslass des Rohres fluchtet.

3. Sperrvorrichtung nach Anspruch 2, dadurch gekennzeichnet, dass das Ventil (5) im Taucher (2) auf einer quer zur Bewegungsrichtung des Tauchers (2) montierten Achse (6) kippbar montiert ist und das Ventil (5) mit einer exzentrischen Bohrung versehen ist, die mit einem Kipparm (8) in Kontakt ist, welcher bewirkt, dass das Ventil gekippt wird, wenn das Ventil (5) durch den Taucher (2) verschoben wird.

4. Sperrvorrichtung nach Anspruch 3, dadurch gekennzeichnet, dass der Kipparm (8) auf solche Weise einer Federkraft ausgesetzt ist, dass nachdem bewirkt wurde, dass das Kugelventil (5) um 90 Grad gekippt wird, der Kipparm (8) zusammen mit dem Kugelventil (5) unter Federkraft weiter verschoben wird.

5. Sperrvorrichtung für ein Rohr, wie in einem der vorangehenden Ansprüchen beansprucht.

fig- 1

fig- 2